# EUROPÄISCHE PATENTSCHRIFT

(11) **EP 2 490 000 B1**
(45) Veröffentlichungstag und Bekanntmachung des Hinweises auf die Patenterteilung: **18.09.2013**
(21) Anmeldenummer: 11154627.1
(22) Anmeldetag: 16.02.2011
(51) Int. Cl.: G01K 13/12, G01N 1/12, G01N 33/20

(54) **Automatisiertes Einstecken eines Kontaktstabes in eine hüttentechnische Sonde**
Automatic insertion of a contact bar in a foundry probe
Connexion enfichable automatisée d'une tige de contact dans une sonde technique sidérurgique

(43) Veröffentlichungstag der Anmeldung: 22.08.2012
(73) Patentinhaber: Siemens VAI Metals Technologies GmbH, 4031 Linz (AT)
(72) Erfinder: Scheidegger, Roger, 4300, St.Valentin (AT); Ebner, Helmut, 4331, Naarn i.M. (AT); Pfeil, Simon, 4040, Linz (AT)
(74) Vertreter: Maier, Daniel Oliver

(56) Entgegenhaltungen:
- DE-A1- 2 552 270
- Anonymous: "SIMETAL LiquiRob for EAF", , 11. März 2010 (2010-03-11), XP55003983, Gefunden im Internet: URL:http://is.industry.siemens.com/broschu eren/pdf/metals/simetal/en/SIMETAL_LiquiRo b_EAF_en.pdf [gefunden am 2011-08-01]

## Beschreibung

Automatisiertes Einstecken eines Kontaktstabes in eine hüttentechnische Sonde

Die vorliegende Erfindung betrifft ein Verfahren zum Einstecken eines mittels einer Halte- und Bewegungsvorrichtung in einem Haltebereich gehaltenen Kontaktstabes in eine eine Sondenlängsachse aufweisende, an einer Stirnseite offene hüttentechnische Sonde,
- wobei eine Lagerstelle für die Sonde mit der Sonde derart bestückt wird, dass deren offene Stirnseite einer vorbestimmten Einsteckrichtung zugewandt ist,
- wobei die Lagerstelle Sondenzentrierelemente aufweist, mittels derer die Sonde in der Lagerstelle quer zur Sondenlängsachse gesehen in einer vorbestimmten Sondenposition gehalten wird,
- wobei ein Ende des Kontaktstabes in eine Kontaktstabzentriereinrichtung eingeführt wird und dadurch derart positioniert wird, dass das Ende des Kontaktstabes der offenen Stirnseite gegenüber liegt,
- wobei sodann der Kontaktstab in Richtung der Sondenlängsachse bewegt und dadurch in die Sonde eingesteckt wird.

Die vorliegende Erfindung betrifft weiterhin eine Lagerstelle für eine eine Sondenlängsachse aufweisende, an einer Stirnseite offene hüttentechnische Sonde,
- wobei die Lagerstelle Sondenzentrierelemente aufweist, mittels derer die Sonde in der Lagerstelle quer zur Sondenlängsachse gesehen in einer vorbestimmten Sondenposition gehalten wird,
- wobei die Lagerstelle eine Kontaktstabzentriereinrichtung aufweist, in die ein Ende eines mittels einer Halte- und Bewegungsvorrichtung in einem Haltebereich gehaltenen Kontaktstabes einführbar ist, so dass das Ende des Kontaktstabes aufgrund des Einführens in die Kontaktstabzentriereinrichtung quer zur Sondenlängsachse gesehen bei einer vorbestimmten Kontaktstabposition positioniert ist.

Die vorliegende Erfindung betrifft weiterhin einen Halterahmen, der eine Vielzahl derartiger Lagerstellen aufweist.

Bei der Herstellung von Eisen, Stahl und anderen Metallen werden Proben des flüssigen Metalls entnommen, erfolgt eine Temperaturerfassung usw.. Für derartige Aufgaben werden hüttentechnische Sonden verwendet, die eine Sondenlängsachse aufweisen und an einer Stirnseite offen sind. An der anderen Stirnseite sind sie geschlossen. Die Sonden werden in der Regel nur einmal verwendet und danach entsorgt.

Im Stand der Technik werden die Sonden mit einem Kontaktstab verbunden, so dass der Kontaktstab in die Sonde eingesteckt ist (Zustand). Sodann wird der Kontaktstab einschließlich der aufgesteckten Sonde mittels eines Manipulators oder Roboters oder dergleichen in die Metallschmelze getaucht und so die Sonde ihrer Zweckbestimmung zugeführt. Danach wird der Kontaktstab einschließlich der aufgesteckten Sonde aus der Metallschmelze herausgezogen. Danach wird die Sonde vom Kontaktstab entfernt.

Im Stand der Technik ist bekannt, dass ein Arbeiter die jeweils zu verwendende Sonde aus einem Vorratsbehälter entnimmt und manuell auf den Kontaktstab aufsteckt. Dies ist umständlich, mühsam und aufgrund der rauen Betriebsverhältnisse in hüttentechnischen Anlagen möglichst zu vermeiden. Es ist daher eine automatisierte Lösung anzustreben. Für die Realisierung einer automatisierten Lösung stellen sich jedoch im Wesentlichen zwei Probleme.

Zum einen wird beim Eintauchen des Kontaktstabes in die Metallschmelze der Kontaktstab oftmals plastisch verbogen. Das Ausmaß der plastischen Verbiegung kann variieren. Aufgrund des Umstands, dass das in die Sonde einzusteckende Ende des Kontaktstabes jedoch sehr genau positioniert werden muss, sind auch geringfügige Verbiegungen bezüglich eines automatisierten Einsteckens des Endes des Kontaktstabes in die Sonde kritisch. Beispielsweise kann der Kontaktstab einen Durchmesser von ca. 16 mm aufweisen, die Sonde einen Innendurchmesser von ca. 16,5 mm bis 17,0 mm.

Zum anderen schwingt und vibriert das in die Sonde einzusteckende Ende des Kontaktstabes oftmals, beispielsweise aufgrund von Erschütterungen und dem mehr oder minder ruckartigen Bewegen großer Massen. Auch derartige Schwingungen und Vibrationen erschweren aufgrund der erforderlichen Positioniergenauigkeit das automatisierte Einstecken des Endes des Kontaktstabes in die Sonde erheblich.

Um dennoch eine automatisierte Lösung realisieren zu können, ist es im Stand der Technik bekannt, eine Zentriervorrichtung zu verwenden, die einen kontaktstabseitigen Trichterbereich und einen sondenseitigen Trichterbereich aufweist, die an ihren Engstellen ineinander übergehen. Durch Einführen des Endes des Kontaktstabes in den kontaktstabseitigen Trichterbereich und Einführen der Sonde in den sondenseitigen Trichterbereich werden das Ende des Kontaktstabes und die offene Stirnseite der Sonde relativ zueinander zentriert, so dass das Ende des Kontaktstabes in die Sonde eingesteckt werden kann.

Die bekannte Zentriervorrichtung muss zwangsweise öffenbar sein, da anderenfalls der Kontaktstab nach dem Einstecken in die Sonde zwar wieder aus der Sonde herausgezogen werden könnte, aber nicht zusammen mit der Sonde der Zentriervorrichtung entnommen werden könnte. Die bekannte Zentriervorrichtung muss daher eine entsprechende Aktorik, entsprechende bewegte Teile, eine Energieversorgung und eine Steuereinrichtung umfassen. Sie ist daher zum einen relativ komplex und teuer und zum anderen aufgrund der rauen Betriebsverhältnisse in hüttentechnischen Anlagen relativ störanfällig.

Aus der DE 25 52 270 A1 ist ein Verfahren zum Einstecken eines Kontaktstabes in eine hüttenmännische Sonde und eine Lagerstelle für die hüttenmännische Sonde bekannt. Vor dem Einstecken des Kontaktstabs in die Sonde wird die Lagerstelle mit der Sonde derart bestückt, dass die offene Stirnseite der Sonde einer Einsteckrichtung zugewandt ist. Die Lagerstelle umfasst eine Einlaufzentriereinrichtung für den Kontaktstab.

Aus der Veröffentlichung "SIMETAL LiquiRob for EAF" der Siemens VAI Metals Technologies GmbH ist die Verwendung eines Roboters für die automatische Probennahme bekannt.

Die Aufgabe der vorliegenden Erfindung besteht darin, Möglichkeiten zu schaffen, mittels derer auf einfache Weise ein zuverlässiges automatisiertes Einstecken des Endes des Kontaktstabes in die Sonde möglich ist.

Die Aufgabe wird durch ein Verfahren mit den Merkmalen des Anspruchs 1 gelöst. Vorteilhafte Ausgestaltungen des erfindungsgemäßen Verfahrens sind Gegenstand der abhängigen Ansprüche 2 bis 7.

Erfindungsgemäß ist vorgesehen, ein Verfahren zum Einstecken eines mittels einer Halte- und Bewegungsvorrichtung in einem Haltebereich gehaltenen Kontaktstabes in eine eine Sondenlängsachse aufweisende, an einer Stirnseite offene hüttentechnische Sonde zu schaffen,
- wobei eine Lagerstelle für die Sonde mit der Sonde derart bestückt wird, dass deren offene Stirnseite einer vorbestimmten Einsteckrichtung zugewandt ist,
- wobei die Lagerstelle Sondenzentrierelemente aufweist, mittels derer die Sonde in der Lagerstelle quer zur Sondenlängsachse gesehen in einer vorbestimmten Sondenposition gehalten wird,
- wobei ein Ende des Kontaktstabes in einer quer zur Sondenlängsachse verlaufenden Einführrichtung in eine Kontaktstabzentriereinrichtung einführt wird, bis das Ende des Kontaktstabes aufgrund des Einführens in die Kontaktstabzentriereinrichtung quer zur Sondenlängsachse gesehen bei einer vorbestimmten Kontaktstabposition positioniert ist, bei welcher das Ende des Kontaktstabes der offenen Stirnseite gegenüberliegt,
- wobei sodann der Kontaktstab in Richtung der Sondenlängsachse bewegt und dadurch in die Sonde eingesteckt wird.

Durch diese Vorgehensweise wird erreicht, dass das Ende des Kontaktstabes zuverlässig in die Sonde eingesteckt werden kann, ohne eine komplexe angetriebene, gesteuerte usw. Zentriervorrichtung zu benötigen. Die Lagerstelle kann vielmehr rein starr mechanisch ausgebildet sein.

In dem Fall, dass der Kontaktstab unverbogen wäre, müsste der Kontaktstab in der Einführrichtung bis zu einer Idealposition bewegt werden, damit das Ende des Kontaktstabes aufgrund des Einführens in die Kontaktstabzentriereinrichtung quer zur Sondenlängsachse gesehen bei der vorbestimmten Kontaktstabposition positioniert ist. Es ist beispielsweise möglich, dass der Kontaktstab in der Einführrichtung über die Idealposition hinaus bewegt wird. Aufgrund eines derartigen "Überschießens" bzw. "Überbiegens" liegt das Ende des Kontaktstabes unabhängig davon, ob der Kontaktstab verbogen ist oder nicht, stets an der Kontaktstabzentriereinrichtung an, wodurch er zum einen die definierte Position annimmt und zum anderen Vibrationen und Schwingungen unterdrückt werden.

Alternativ besteht eine gleichwertige Ausgestaltung darin, dass während des Einführens des Endes des Kontaktstabes in die Kontaktstabzentriereinrichtung eine zum Einführen des Endes des Kontaktstabes erforderliche Kraft erfasst wird und anhand der Kraft das Erreichen der vorbestimmten Kontaktstabposition erkannt wird.

Das Einstecken des Endes des Kontaktstabes in die Sonde ist besonders einfach und zuverlässig dadurch möglich, dass der Kontaktstab beim Bewegen in Richtung der Sondenlängsachse zunächst nur ein Stück in die Sonde eingesteckt wird, der Kontaktstab sodann entgegen der Einführrichtung aus der vorbestimmten Kontaktstabposition heraus bewegt wird und der Kontaktstab erst danach vollständig in die Sonde eingesteckt wird.

Die Einsteckbarkeit wird noch weiter erleichtert, wenn die Sonde vor dem Bestücken der Lagerstelle an ihrer offenen Stirnseite aufweitet wird. Die entsprechende Aufweitung kann insbesondere trichterförmig sein.

Die Halte- und Bewegungsvorrichtung kann nach Bedarf ausgebildet sein. Insbesondere kann sie als Roboterarm ausgebildet sein.

Die Aufgabe wird weiterhin durch eine Lagerstelle für eine eine Sondenlängsachse aufweisende, an einer Stirnseite offene hüttentechnische Sonde gelöst,
- wobei die Lagerstelle Sondenzentrierelemente aufweist, mittels derer die Sonde in der Lagerstelle quer zur Sondenlängsachse gesehen in einer vorbestimmten Sondenposition gehalten wird,
- wobei die Lagerstelle eine Kontaktstabzentriereinrichtung aufweist, in die ein Ende eines mittels einer Halte- und Bewegungsvorrichtung in einem Haltebereich gehaltenen Kontaktstabes in einer quer zur Sondenlängsachse verlaufenden Einführrichtung einführbar ist, bis das Ende des Kontaktstabes aufgrund des Einführens in die Kontaktstabzentriereinrichtung quer zur Sondenlängsachse gesehen bei einer vorbestimmten Kontaktstabposition positioniert ist.

In einer bevorzugten Ausgestaltung der erfindungsgemäßen Lagerstelle ist vorgesehen, dass die Lagerstelle an ihrer der Kontaktstabzentriereinrichtung in Bezug auf die Sonde gegenüberliegenden Seite einen Anschlag für die Sonde aufweist, mittels dessen ein Verschieben der Sonde in Richtung der Sondenlängsachse verhindert wird.

Die Aufgabe wird weiterhin durch einen Halterahmen gelöst, der eine Vielzahl derartiger Lagerstellen aufweist. Die Lagerstellen können insbesondere in einem zweidimensionalen Raster angeordnet sein.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1 und 2: schematisch einen Halterahmen in perspektivi-scher Darstellung,
- FIG 3: schematisch eine Sonde im Querschnitt,
- FIG 4: schematisch eine Lagerstelle in einer Seiten-ansicht,
- FIG 5: einen Schnitt entlang einer Linie V-V in FIG 4,
- FIG 6: einen Schnitt entlang einer Linie VI-VI in FIG 4,
- FIG 7: eine perspektivische Darstellung von FIG 6,
- FIG 8: schematisch das Einführen des Endes eines Kon-taktstabes in eine Kontaktstabzentriereinrich-tung,
- FIG 9: schematisch die Sonde und den relativ zur Son-de zentrierten Kontaktstab,
- FIG 10: die Sonde und den Kontaktstab in einem teil-weise eingesteckten Zustand des Kontaktstabes,
- FIG 11: die Sonde und den Kontaktstab in einem angeho-benen Zustand des Kontaktstabes,
- FIG 12: schematisch eine Kontaktstabzentriereinrich-tung mit eingeführtem Ende des Kontaktstabes,
- FIG 13: den Kontaktstab in unverbogenem Zustand und in verbogenen Zuständen und
- FIG 14 und 15: schematisch das Einführen des Endes eines Kon-taktstabes in eine Kontaktstabzentriereinrich-tung.

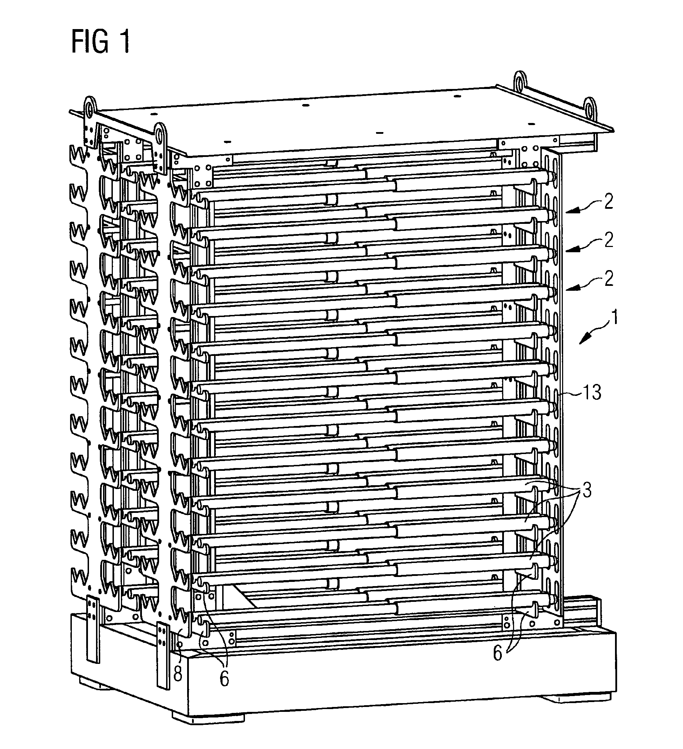

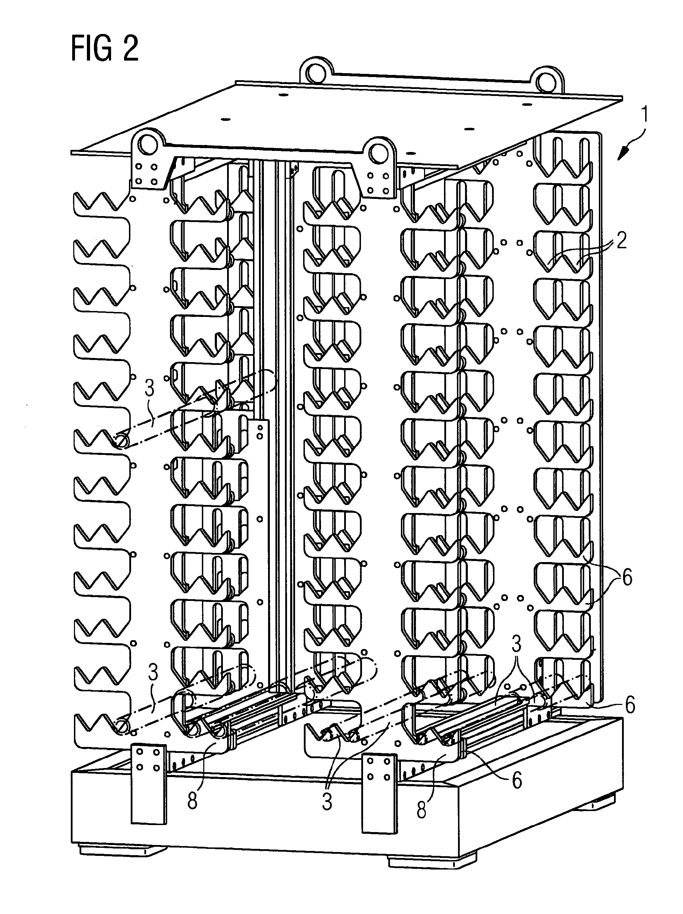

Gemäß den FIG 1 und 2 weist ein Halterahmen 1 eine Vielzahl von Lagerstellen 2 auf. Die Lagerstellen 2 sind gemäß den FIG 1 und 2 in einem zweidimensionalen Raster angeordnet. Alternativ könnten die Lagerstellen 2 in einem eindimensionalen Raster angeordnet sein. Theoretisch ist sogar eine unregelmäßige Anordnung der Lagerstellen 2 möglich. Entscheidend ist, dass die Lagerstellen 2 an definierten Orten liegen.

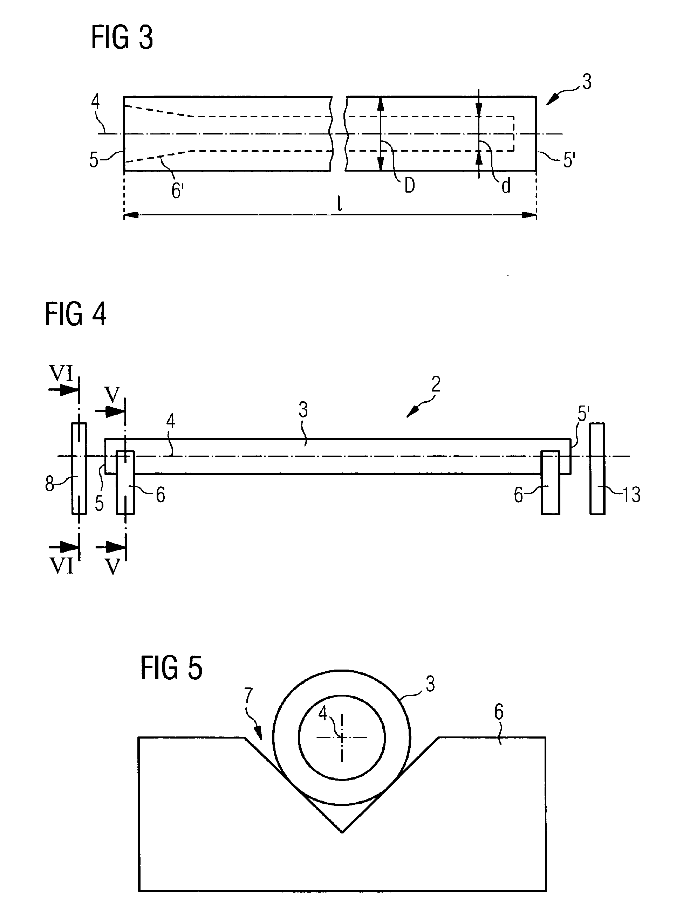

Die Lagerstellen 2 sind jeweils für die Aufnahme je einer (ergänze: einzigen) hüttentechnischen Sonde 3 ausgelegt. Derartige Sonden 3 sind Fachleuten allgemein bekannt. Sie dienen beispielsweise der Entnahme von Proben bei Metallschmelzen oder der Temperaturmessung derartiger Metallschmelzen. Als geschmolzene Metalle kommen insbesondere Eisen, Stahl, Kupfer und Aluminium in Frage. Es sind auch andere Metalle möglich. FIG 3 zeigt eine typische Sonde 3 im Querschnitt.

Gemäß FIG 3 ist die Sonde 3 rohrartig ausgebildet. Sie weist eine Sondenlängsachse 4 auf, entlang derer sie sich erstreckt. Eine Länge 1 der Sonde 3 liegt oftmals im Bereich von 1 m bis 2 m. Ein Außendurchmesser D der Sonde liegt oftmals bei ca. 2,5 cm bis 5 cm.

Die Sonde 3 ist innen hohl. Sie weist einen Innendurchmesser d auf, der in der Regel bei 12 mm bis 20 mm liegt, beispielsweise bei 16,5 mm bis 17,0 mm. Die Sonde 3 weist zwei Stirnseiten 5, 5' auf. An einer Stirnseite 5 - nachfolgend offene Stirnseite 5 genannt - ist die Sonde 3 offen. An der anderen Stirnseite 5' - nachfolgend geschlossene Stirnseite 5' genannt - ist die Sonde 3 geschlossen.

Vorzugsweise - aber nicht zwangsweise - wird die Sonde 3 gemäß der Darstellung von FIG 3 an ihrer offenen Stirnseite 5 aufgeweitet. Eine entsprechende Aufweitung 6' kann insbesondere trichterförmig sein.

Der Zeitpunkt, zu dem die Sonde 3 aufgeweitet wird, kann nach Bedarf bestimmt sein. Beispielsweise kann das Aufweiten bereits beim Herstellen der Sonde 3 erfolgen. Alternativ kann es zu einem späteren Zeitpunkt erfolgen. Entscheidend ist, dass die Sonde 3 vor dem Einlegen der Sonde 3 in eine der Lagerstellen 2 des Halterahmens 1, also vor dem Bestücken der jeweiligen Lagerstelle 2 mit der jeweiligen Sonde 3, in die Sonde 3 eingebracht wird.

FIG 4 zeigt schematisch eine der Lagerstellen 2 des Halterahmens 1, wobei die dargestellte Lagerstelle 2 mit einer Sonde 3 bestückt ist. Die entsprechende Lagerstelle 2 ist also bereits bestückt worden. Das Bestücken der Lagerstelle 2 mit der Sonde 3 erfolgte derart, dass die offene Stirnseite 5 einer vorbestimmten Einsteckrichtung zugewandt ist.

Gemäß FIG 4 weist die Lagerstelle 2 Sondenzentrierelemente 6 auf, mittels derer die Sonde 3 in der Lagerstelle 2 quer zur Sondenlängsachse 4 gesehen in einer vorbestimmten Position gehalten wird. Diese Position wird nachfolgend Sondenposition genannt. Beispielsweise können die Sondenzentrierelemente 6 als Stahlstege ausgebildet sein, die - siehe FIG 5 - auf ihrer Oberseite eine V-förmige (alternativ beispielsweise U-förmige oder Y-förmige) Ausnehmung 7 aufweisen. Auch könnten die Sondenzentrierelemente 6 beispielsweise als Schlitze ausgebildet sein, bei denen die Schlitzbreite mit dem Außendurchmesser D der Sonde 3 korrespondiert.

Gemäß FIG 4 sind zwei derartige Sondenzentrierelemente 6 vorhanden. Die Anzahl an Sondenzentrierelementen 6 ist jedoch beliebig. Minimal muss nur ein einziges Sondenzentrierelement 6 vorhanden sein. Alternativ könnten auch drei, vier, fünf usw. Sondenzentrierelemente 6 vorhanden sein.

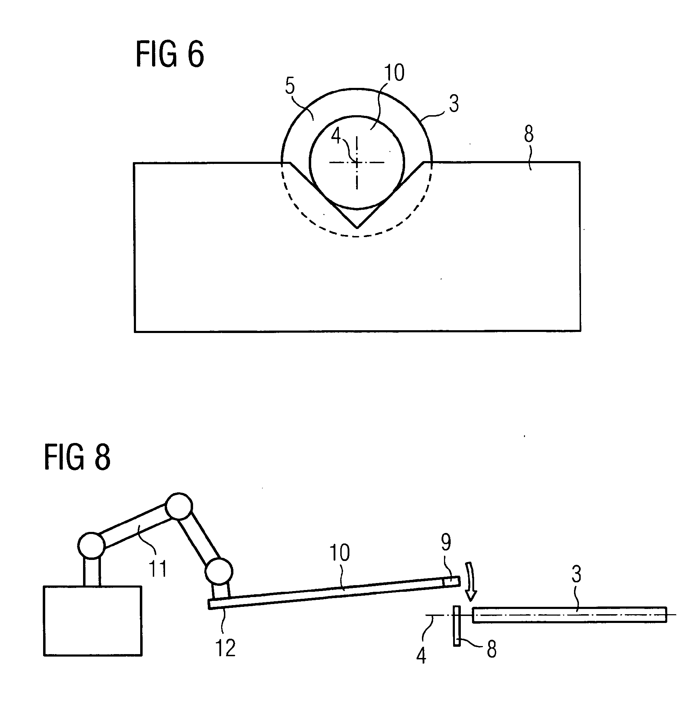

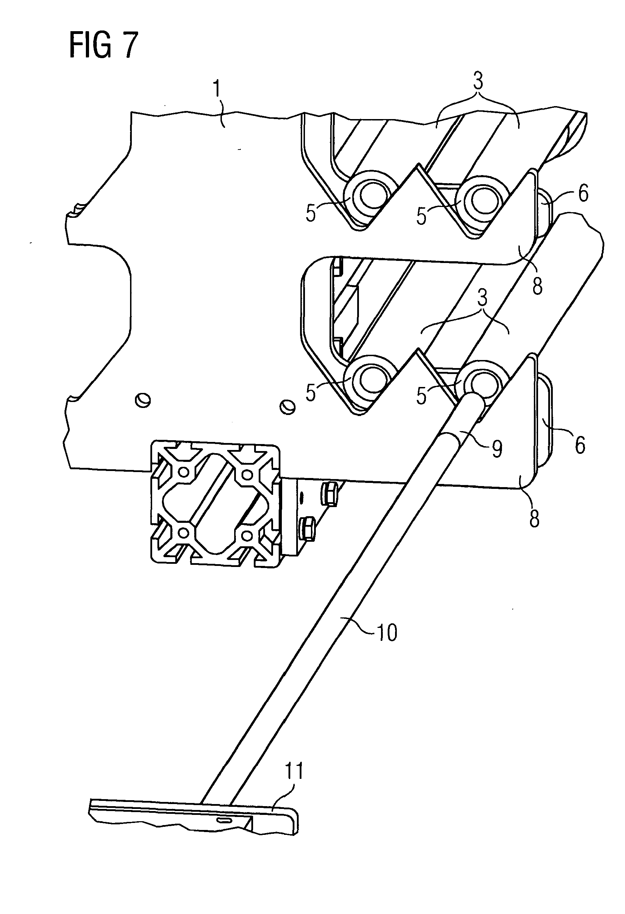

Die Lagerstelle 2 weist gemäß FIG 4 weiterhin eine Kontaktstabzentriereinrichtung 8 auf. Die Kontaktstabzentriereinrichtung 8 ist derart ausgebildet, dass in sie - siehe FIG 6 und 7 - ein Ende 9 eines Kontaktstabes 10 einführbar ist. Das Einführen des Endes 9 des Kontaktstabes 10 in die Kontaktstabzentriereinrichtung 8 erfolgt in einer Einführrichtung. Die Einführrichtung - siehe den Pfeil in FIG 8 - ist, wie aus den FIG 6 bis 8 ersichtlich ist, quer zur Sondenlängsachse 4. Das Einführen wird gemäß FIG 8 durch eine Halte- und Bewegungsvorrichtung 11 bewirkt, welche den Kontaktstab 10 in einem Haltebereich 12 des Kontaktstabes 10 hält. Die Halte- und Bewegungsvorrichtung 11 ist gemäß FIG 8 als Roboterarm ausgebildet. Diese Ausgestaltung ist möglich und bevorzugt, aber nicht zwingend. Ein Abstand des Haltebereichs 12 des Kontaktstabes 10 vom Ende 9 des Kontaktstabes 10 liegt oftmals bei 1 m und mehr.

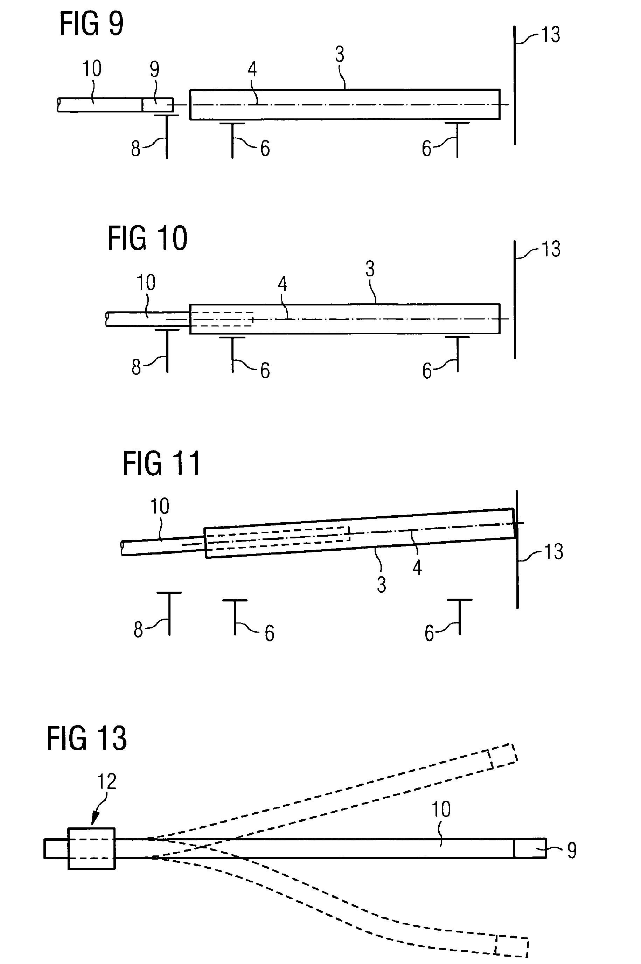

Wie aus den FIG 6 bis 8 ersichtlich ist, verläuft die Einführrichtung von oben nach unten. Prinzipiell kann die Richtung jedoch beliebig sein. Entscheidend ist, dass das Ende 9 des Kontaktstabes 10 so lange in der Einführrichtung in die Kontaktstabzentriereinrichtung 8 eingeführt wird, bis das Ende 9 des Kontaktstabes 10 aufgrund des Einführens in die Kontaktstabzentriereinrichtung 8 quer zur Sondenlängsachse 4 gesehen bei einer vorbestimmten Kontaktstabposition positioniert ist. Die Kontaktstabposition ist - siehe insbesondere die FIG 6 und 7 - derart gewählt, dass das Ende 9 des Kontaktstabes 10 der offenen Stirnseite 5 (ergänze: exakt bzw. hinreichend genau) gegenüberliegt. Diese Lage des Endes 9 des Kontaktstabes 10 ist schematisch in FIG 9 dargestellt. Der Kontaktstab 10 wird daher als nächstes - siehe FIG 10 - mittels der Halte- und Bewegungsvorrichtung 11 in Richtung der Sondenlängsachse 4 bewegt und dadurch in die Sonde 3 eingesteckt.

Es ist möglich, dass die Sonde 3 während des Einsteckens des Endes 9 des Kontaktstabes 10 durch ihr Eigengewicht und Reibungskräfte in den Sondenzentrierelementen 6 gehalten wird. Vorzugsweise weist die Lagerstelle 2 jedoch entsprechend FIG 4 an ihrer der Kontaktstabzentriereinrichtung 8 in Bezug auf die Sonde 3 gegenüberliegenden Seite einen Anschlag 13 für die Sonde 3 auf. In diesem Fall kann durch das Einstecken des Endes 9 des Kontaktstabes 10 in die Sonde 3 die Sonde 3 zwar eventuell ein kleines Stück verschoben werden, bis die geschlossene Stirnseite 5' der Sonde 3 an den Anschlag 13 angedrückt wird. Danach jedoch wird ein (weiteres) Verschieben der Sonde 3 in Richtung der Sondenlängsachse 4 mittels des Anschlages 13 verhindert.

Es ist denkbar, den Kontaktstab 10 sofort vollständig in die Sonde 3 einzustecken. Vorzugsweise jedoch wird der Kontaktstab 10 beim Bewegen in Richtung der Sondenlängsachse 4 zunächst nur ein Stück in die Sonde 3 eingesteckt, beispielsweise um 10 % bis 25 % der vollen Einstecklänge. Dieser Zustand ist in FIG 10 dargestellt. Sodann wird der Kontaktstab 10 (und mit ihm die Sonde 3) entgegen der Einführrichtung aus der vorbestimmten Kontaktstabposition herausbewegt. Dieser Zustand ist in FIG 11 schematisch dargestellt. Erst in diesem Zustand wird der Kontaktstab 10 vollständig in die Sonde 3 eingesteckt. Es ist möglich, auch das weitere Einstecken des Kontaktstabes 10 in die Sonde 3 schrittweise auszuführen. Alternativ kann im zweiten Schritt ein Einschieben um die gesamte verbleibende Einstecklänge erfolgen.

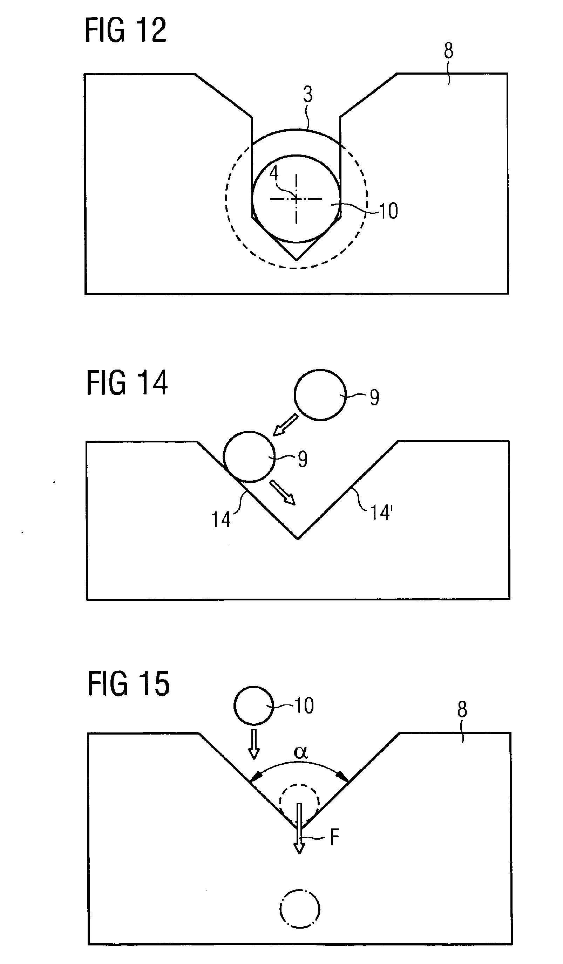

Um die entsprechende Positionierung des Endes 9 des Kontaktstabes 10 in der Kontaktstabzentriereinrichtung zu gewährleisten, kann die Kontaktstabzentriereinrichtung 8 auf verschiedene Weise ausgebildet sein. Insbesondere ist es möglich, dass die Kontaktstabzentriereinrichtung 8 entsprechend der Darstellung der FIG 6 und 7 als im Wesentlichen V-förmige (alternativ beispielsweise U-förmige) Rinne ausgebildet ist. Es sind jedoch alternative Gestaltungen möglich, beispielsweise, wie in FIG 12 dargestellt, Y-förmig.

Wie bereits erwähnt, kann es geschehen, dass der Kontaktstab 10 plastisch verbogen ist. In diesem Fall weist der Kontaktstab 10 nicht mehr seine Idealgestalt auf, die in FIG 13 in durchgezeichneten Linien dargestellt ist, sondern er ist verbogen. Mögliche Verbiegungen sind in FIG 13 - stark übertrieben - gestrichelt dargestellt. Um mit Sicherheit zu gewährleisten, dass das Ende 9 des Kontaktstabes 10 sich zu Beginn des Einsteckens in die Sonde 3 in der Kontaktstabposition befindet, ist es möglich, dass während des Einführens des Endes 9 des Kontaktstabes 10 in die Kontaktstabzentriereinrichtung 8 eine zum Einführen des Endes 9 des Kontaktstabes 10 erforderliche Kraft erfasst wird. Beispielsweise kann ein Motorstrom oder ein Motormoment eines Antriebs der Halte- und Bewegungsvorrichtung 11 erfasst werden. In diesem Fall kann anhand der Kraft das Erreichen der vorbestimmten Kontaktstabposition erkannt werden. Beispielsweise kann - siehe FIG 14 das Ende 9 des Kontaktstabes 10 zunächst orthogonal zu einer ersten Kante 14 der Kontaktstabzentriereinrichtung 8 an diese Kante 14 herangefahren werden. Das Erreichen der Kante 14 kann beispielsweise durch ein Ansteigen des zum Bewegen des Kontaktstabes 10 erforderlichen elektrischen Stromes erkannt werden. Sodann kann das Ende 9 des Kontaktstabes 10 durch Verfahren entlang der Kante 14 auf eine zweite Kante 14' der Kontaktstabzentriereinrichtung 8 weiterbewegt werden, bis das Ende 9 des Kontaktstabes 10 an der zweiten Kante 14' der Kontaktstabzentriereinrichtung 8 anliegt. Auch hier kann das Erreichen der zweiten Kante 14' durch ein entsprechendes Ansteigen des Motorstroms erkannt werden. Wiederum alternativ kann das Ende 9 des Kontaktstabes 10 nacheinander an die beiden Kanten 14, 14' herangefahren werden und jeweils das Erreichen der Kante 14, 14' erkannt werden, wobei während der beiden Heranfahrbewegungen das Ende 9 des Kontaktstabes 10 von der jeweils anderen Kante 14', 14 beabstandet gehalten wird. Dadurch kann - in zwei Dimensionen - das Ausmaß ermittelt werden, um das der Kontaktstab 10 verbogen ist.

Wiederum alternativ ist folgende Vorgehensweise möglich: Ein von der Kontaktstabzentriereinrichtung 8 gebildeter Führungstrichter ist - siehe FIG 15 - relativ steil. In der Regel beträgt ein Öffnungswinkel α des Führungstrichters gemäß FIG 15 maximal 90°. Die Einführrichtung entspricht in etwa der Winkelhalbierenden. Wenn der Kontaktstab 10 nicht verbogen wäre, würde die Position des Endes 9 des Kontaktstabes 10 durch die Stellung der Halte- und Bewegungsvorrichtung 11 - in engen Grenzen - eindeutig bestimmt sein. Insbesondere existiert eine Idealposition, bei welcher der unverbogene Kontaktstab 10 derart gehalten wird, dass das Ende 9 des unverbogenen Kontaktstabes 10 gerade (just) in der Kontaktstabposition positioniert ist. Diese Stellung des Endes 9 des Kontaktstabes 10 ist in FIG 15 gestrichelt eingezeichnet.

Der Kontaktstab 10 wird jedoch nicht nur bis zu der genannten Idealposition bewegt, sondern darüber hinaus. Wäre der Kontaktstab 10 unverbogen und wäre die Kontaktstabzentriereinrichtung 8 nicht vorhanden, befände sich das Ende 9 des Kontaktstabes 10 an einer Position, die in FIG 15 strichpunktiert dargestellt ist. Ist der Kontaktstab 10 unverbogen und ist die Kontaktstabzentriereinrichtung 8 vorhanden, wird der Kontaktstab 10 daher durch die Kontaktstabzentriereinrichtung 8 in der gewünschten Kontaktstabposition positioniert, wobei der Kontaktstab 10 elastisch verbogen wird. Es wirkt also eine Biegekraft F mit welcher das Ende 9 des Kontaktstabes 10 in der gewünschten Kontaktstabposition gehalten wird.

Aufgrund des Umstandes, dass der Kontaktstab 10 verbogen sein kann, ist nicht exakt bekannt, wie weit das Ende 9 des Kontaktstabes 10 plastisch versetzt ist. Es ist jedoch ein maximaler Versatz bekannt. Es ist daher lediglich erforderlich, das Ausmaß, um welches das Ende 9 des Kontaktstabes 10 über die Idealposition hinaus bewegt wird, größer zu wählen als den maximalen Versatz. In diesem Fall wird stets gewährleistet, dass das Ende 9 des Kontaktstabes 10 in der gewünschten Kontaktstabposition an die Kontaktstabzentriereinrichtung 8 angedrückt wird. Die dabei auftretende Verbiegung des Kontaktstabes ist nur elastisch und daher unkritisch.

Die vorliegende Erfindung weist viele Vorteile auf. Insbesondere ist es möglich, den Halterahmen 1 als starre Konstruktion - also ohne bewegliche Teile, ohne Aktoren, ohne Steuereinrichtung usw. - zu gestalten und dennoch sicher und zuverlässig das Ende 9 des Kontaktstabes 10 in die Sonde 3 einzustecken. Gleiches gilt für eine einzelne Lagerstelle 2. Wartungsarbeiten in Bezug auf den Halterahmen 1 oder die Lagerstellen 2 entfallen daher völlig. Es ist lediglich erforderlich, von Zeit zu Zeit die Lagerstellen 2 mit neuen Sonden 3 zu bestücken. Dieses Bestücken kann schnell und einfach erfolgen, wobei zu diesem Bestückungsvorgang alternativ eine automatisierte oder eine manuelle Vorgehensweise erfolgen kann.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

### Bezugszeichenliste

- 1: Halterahmen
- 2: Lagerstellen
- 3: Sonde
- 4: Sondenlängsachse
- 5: offene Stirnseite
- 5': geschlossene Stirnseite
- 6: Sondenzentrierelemente
- 6': Aufweitung
- 7: Ausnehmung
- 8: Kontaktstabzentriereinrichtung
- 9: Ende
- 10: Kontaktstab
- 11: Halte- und Bewegungsvorrichtung
- 12: Haltebereich
- 13: Anschlag
- 14, 14': Kanten

- d: Innendurchmesser
- D: Außendurchmesser
- F: Biegekraft
- l: Länge

- α: Öffnungswinkel

## Patentansprüche

1. Verfahren zum Einstecken eines mittels einer Halte- und Bewegungsvorrichtung (11) in einem Haltebereich (12) gehaltenen Kontaktstabes (10) in eine eine Sondenlängsachse (4) aufweisende, an einer Stirnseite (5) offene hüttentechnische Sonde (3),
- wobei eine Lagerstelle (2) für die Sonde (3) mit der Sonde (3) derart bestückt wird, dass deren offene Stirnseite (5) einer vorbestimmten Einsteckrichtung zugewandt ist,
**dadurch gekennzeichnet,**
- **dass** die Lagerstelle (2) Sondenzentrierelemente (6) aufweist, mittels derer die Sonde (3) in der Lagerstelle (2) quer zur Sondenlängsachse (4) gesehen in einer vorbestimmten Sondenposition gehalten wird,
- **dass** ein Ende (9) des Kontaktstabes (10) in einer quer zur Sondenlängsachse (4) verlaufenden Einführrichtung in eine Kontaktstabzentriereinrichtung (8) eingeführt wird, bis das Ende (9) des Kontaktstabes (10) aufgrund des Einführens in die Kontaktstabzentriereinrichtung (8) quer zur Sondenlängsachse (4) gesehen bei einer vorbestimmten Kontaktstabposition positioniert ist, bei welcher das Ende (9) des Kontaktstabes (10) der offenen Stirnseite (5) gegenüberliegt,
- **dass** sodann der Kontaktstab (10) in Richtung der Sondenlängsachse (4) bewegt und dadurch in die Sonde (3) eingesteckt wird.

2. Verfahren nach Anspruch 1,
**dadurch gekennzeichnet,**
- **dass** der Kontaktstab (10) in dem Fall, dass er unverbogen wäre, in der Einführrichtung bis zu einer Idealposition bewegt werden müsste, damit das Ende (9) des Kontaktstabes (10) aufgrund des Einführens in die Kontaktstabzentriereinrichtung (8) quer zur Sondenlängsachse (4) gesehen bei der vorbestimmten Kontaktstabposition positioniert ist, und
- **dass** der Kontaktstab (10) in der Einführrichtung über die Idealposition hinaus bewegt wird.

3. Verfahren nach Anspruch 1,
**dadurch gekennzeichnet ,**
**dass** während des Einführens des Endes (9) des Kontaktstabes (10) in die Kontaktstabzentriereinrichtung (8) eine zum Einführen des Endes (9) des Kontaktstabes (10) erforderliche Kraft erfasst wird und dass anhand der Kraft das Erreichen der vorbestimmten Kontaktstabposition erkannt wird.

4. Verfahren nach Anspruch 1, 2 oder 3,
**dadurch gekennzeichnet ,**
**dass** der Kontaktstab (10) beim Bewegen in Richtung der Sondenlängsachse (4) zunächst nur ein Stück in die Sonde (3) eingesteckt wird, dass der Kontaktstab (10) sodann entgegen der Einführrichtung aus der vorbestimmten Kontaktstabposition heraus bewegt wird und dass der Kontaktstab (10) erst danach vollständig in die Sonde (3) eingesteckt wird.

5. Verfahren nach einem der obigen Ansprüche,
**dadurch gekennzeichnet ,**
**dass** die Sonde (3) vor dem Bestücken der Lagerstelle (2) an ihrer offenen Stirnseite (5) aufweitet wird.

6. Verfahren nach Anspruch 5,
**dadurch gekennzeichnet ,**
**dass** die Aufweitung (6') trichterförmig ist.

7. Verfahren nach einem der obigen Ansprüche,
**dadurch gekennzeichnet ,**
**dass** die Halte- und Bewegungsvorrichtung (11) als Roboterarm ausgebildet ist.

8. Lagerstelle für eine eine Sondenlängsachse (4) aufweisende, an einer Stirnseite (5) offene hüttentechnische Sonde (3),
- wobei die Lagerstelle eine Kontaktstabzentriereinrichtung (8) aufweist, in die ein Ende (9) eines mittels einer Halte- und Bewegungsvorrichtung (11) in einem Haltebereich (12) gehaltenen Kontaktstabes (10) in einer quer zur Sondenlängsachse (4) verlaufenden Einführrichtung einführbar ist, bis das Ende (9) des Kontaktstabes (10) aufgrund des Einführens in die Kontaktstabzentriereinrichtung (8) quer zur Sondenlängsachse (4) gesehen bei einer vorbestimmten Kontaktstabposition positioniert ist,
**dadurch gekennzeichnet,**
- **dass** die Lagerstelle Sondenzentrierelemente (6) aufweist, mittels derer die Sonde (3) in der Lagerstelle quer zur Sondenlängsachse (4) gesehen in einer vorbestimmten Sondenposition gehalten wird.

9. Lagerstelle nach Anspruch 8,
**dadurch gekennzeichnet ,**
**dass** die Lagerstelle an ihrer der Kontaktstabzentriereinrichtung (8) in Bezug auf die Sonde (3) gegenüberliegenden Seite einen Anschlag (13) für die Sonde (3) aufweist, mittels dessen ein Verschieben der Sonde (3) in Richtung der Sondenlängsachse (4) verhindert wird.

10. Halterahmen, der eine Vielzahl von Lagerstellen (2) nach Anspruch 8 oder 9 aufweist.

11. Halterahmen nach Anspruch 10,
**dadurch gekennzeichnet ,**
**dass** die Lagerstellen (2) in einem zweidimensionalen Raster angeordnet sind.

## Claims

1. Method for inserting a contact rod (10) held in a holding region (12) by means of a holding and moving device (11) into a metallurgical probe (3) that has a probe longitudinal axis (4) and is open at one end face (5),
- wherein the probe (3) is placed in a storage location (2) for the probe (3) in such a way that the open end face (5) of the probe (3) faces in a predetermined insertion direction,
**characterised in that**
- the storage location (2) has probe centring elements (6) by means of which the probe (3) is held in the storage location (2) in a predetermined probe position, viewed transversely with respect to the probe longitudinal axis (4),
- one end (9) of the contact rod (10) is introduced into a contact rod centring arrangement (8) in an introduction direction running transversely with respect to the probe longitudinal axis (4) until as a result of being introduced into the contact rod centring arrangement (8) the end (9) of the contact rod (10) is positioned at a predetermined contact rod position, viewed transversely with respect to the probe longitudinal axis (4), at which position the end (9) of the contact rod (10) is opposite the open end face (5),
- the contact rod (10) is then moved in the direction of the probe longitudinal axis (4) and thereby inserted into the probe (3).

2. Method according to claim 1,
**characterised in that**
- if the contact rod (10) were in an unbent state it would have to be moved in the introduction direction as far as an ideal position so that as a result of being introduced into the contact rod centring arrangement (8) the end (9) of the contact rod (10) is positioned at the predetermined contact rod position, viewed transversely with respect to the probe longitudinal axis (4), and
- the contact rod (10) is moved in the introduction direction beyond the ideal position.

3. Method according to claim 1,
**characterised in that**
during the introduction of the end (9) of the contact rod (10) into the contact rod centring arrangement (8) a force required in order to introduce the end (9) of the contact rod (10) is measured and the reaching of the predetermined contact rod position is detected on the basis of the force.

4. Method according to claim 1, 2 or 3,
**characterised in that**
when being moved in the direction of the probe longitudinal axis (4) the contact rod (10) is initially inserted only a short way into the probe (3), **in that** the contact rod (10) is then moved out of the predetermined contact rod position counter to the introduction direction, and **in that** only thereafter is the contact rod (10) fully inserted into the probe (3).

5. Method according to one of the above claims, **characterised in that**
before being placed in the storage location (2) the probe (3) is widened at its open end face (5).

6. Method according to claim 5,
**characterised in that**
the widened section (6') is bell-mouthed.

7. Method according to one of the above claims, **characterised in that**
the holding and moving device (11) is embodied as a robotic arm.

8. Storage location for a metallurgical probe (3) that has a probe longitudinal axis (4) and is open at one end face (5)
- wherein the storage location has a contact rod centring arrangement (8) into which one end (9) of a contact rod (10) held in a holding region (12) by means of a holding and moving device (11) can be introduced in an introduction direction running transversely with respect to the probe longitudinal axis (4) until as a result of being introduced into the contact rod centring arrangement (8) the end (9) of the contact rod (10) is positioned at a predetermined contact rod position, viewed transversely with respect to the probe longitudinal axis (4),
**characterised in that**
- the storage location has probe centring elements (6) by means of which the probe (3) is held in the storage location in a predetermined probe position, viewed transversely with respect to the probe longitudinal axis (4).

9. Storage location according to claim 8,
**characterised in that**
at its side disposed opposite the contact rod centring arrangement (8) in relation to the probe (3) the storage location has a stop (13) for the probe (3) by means of which a displacement of the probe (3) in the direction of the probe longitudinal axis (4) is prevented.

10. Holding frame having a plurality of storage locations (2) according to claim 8 or 9.

11. Holding frame according to claim 10,
**characterised in that**
the storage locations (2) are arranged in a two-dimensional grid.

## Revendications

1. Procédé pour insérer dans une sonde technique sidérurgique (3) possédant un axe longitudinal de sonde (4) et ouverte sur un côté frontal (5) une barre de contact (10) maintenue dans une zone de maintien (12) au moyen d'un dispositif de maintien et de déplacement (11),
- un logement palier (2) pour la sonde (3) étant équipé avec la sonde (3) de manière à ce que son côté frontal ouvert (5) soit tourné dans une direction d'insertion prédéterminée,
**caractérisé**
- **en ce que** le logement palier (2) comporte des éléments de centrage de sonde (6) au moyen desquels la sonde (3) est maintenue dans le logement palier (2) dans une position de sonde prédéterminée, vue transversalement par rapport à l'axe longitudinal de sonde (4),
- **en ce qu'**une extrémité (9) de la barre de contact (10) est introduite dans un dispositif de centrage de barre de contact (8) dans une direction d'introduction perpendiculaire à l'axe longitudinal de sonde (4) jusqu'à ce que l'extrémité (9) de la barre de contact (10) soit positionnée dans une position de barre de contact prédéterminée, vue transversalement par rapport à l'axe longitudinal de sonde (4), suite à l'introduction dans le dispositif de centrage de barre de contact (8), position dans laquelle l'extrémité (9) de la barre de contact (10) est située en regard du côté frontal ouvert (5),
- **en ce que** la barre de contact (10) est alors déplacée dans la direction de l'axe longitudinal de sonde (4) et, par ce moyen, est insérée dans la sonde (3).

2. Procédé selon la revendication 1, **caractérisé**
- **en ce que** la barre de contact (10), dans le cas où elle n'est pas déformée, devrait être déplacée dans le dispositif d'introduction jusqu'à une position idéale de manière à ce que l'extrémité (9) de la barre de contact (10) soit positionnée dans la position de barre de contact prédéterminée, vue transversalement par rapport à l'axe longitudinal de sonde (4), suite à l'introduction dans le dispositif de centrage de barre de contact (8), et
- **en ce que** la barre de contact (10) dans le dispositif d'introduction est déplacée au-delà de la position idéale.

3. Procédé selon la revendication 1,
**caractérisé en ce que**, pendant l'introduction de l'extrémité (9) de la barre de contact (10) dans le dispositif de centrage de barre de contact (8), une force nécessaire à l'introduction de l'extrémité (9) de la barre de contact (10) est saisie et **en ce que** la force sert à détecter lorsqu'on a atteint la position de barre de contact prédéterminée.

4. Procédé selon la revendication 1, 2 ou 3, **caractérisé en ce qu'**un morceau seulement est inséré dans la sonde (3), dans un premier temps, lors du déplacement de la barre de contact (10) dans la direction de l'axe longitudinal de sonde (4), **en ce que** la barre de contact (10) est ensuite déplacée dans le sens opposé à la direction d'introduction pour lui faire quitter la position de barre de contact prédéterminée et **en ce que** ce n'est qu'après que la barre de contact (10) est insérée complètement dans la sonde (3).

5. Procédé selon l'une des revendications ci-dessus, **caractérisé en ce que** la sonde (3) est évasée sur son côté frontal ouvert (5) avant d'équiper le logement palier (2).

6. Procédé selon la revendication 5,
**caractérisé en ce que** l'évasement (6') est en forme d'entonnoir.

7. Procédé selon l'une des revendications précédentes, **caractérisé en ce que** le dispositif de maintien et de déplacement (11) est exécuté en tant que bras robotisé.

8. Logement palier pour une sonde technique sidérurgique (3) possédant un axe longitudinal de sonde (4) et ouverte sur un côté frontal (5),
- le logement palier comprenant un dispositif de centrage de barre de contact (8) dans lequel une extrémité (9) d'une barre de contact (10) maintenue dans une zone de maintien (12) au moyen d'un dispositif de maintien et de déplacement (11) peut être introduite dans un dispositif d'introduction s'étendant transversalement par rapport à l'axe longitudinal de sonde (4) jusqu'à ce que l'extrémité (9) de la barre de contact (10) soit positionnée dans une position de barre de contact prédéterminée, vue transversalement par rapport à l'axe longitudinal de sonde (4), suite à l'introduction dans le dispositif de centrage de barre de contact (8),
**caractérisé**
- **en ce que** le logement palier comporte des éléments de centrage de sonde (6) au moyen desquels la sonde (3) est maintenue dans le logement palier dans une position de sonde prédéterminée, vue transversalement par rapport à l'axe longitudinal de sonde (4).

9. Logement palier selon la revendication 8,
**caractérisé en ce que** le logement palier est pourvu, sur son côté opposé au dispositif de centrage de barre de contact (8) par rapport à la sonde (3), d'une butée (13) pour la sonde (3) au moyen de laquelle un déplacement de la sonde (3) dans la direction de l'axe longitudinal de sonde (4) est empêché.

10. Cadre de maintien comprenant une pluralité de logements paliers (2) selon la revendication 8 ou 9.

11. Cadre de maintien selon la revendication 10, **caractérisé en ce que** les logements paliers (2) sont disposés en un réseau bidimensionnel.
